# EUROPEAN PATENT APPLICATION

(11) **EP 3 024 296 A1**
(43) Date of publication of application: **25.05.2016**
(21) Application number: 14290349.1
(22) Date of filing: 18.11.2014
(51) Int. Cl.: H04W 76/02, H04W 48/18, H04L 12/707, H04L 29/06

(54) **Method and device for transmitting data**

(71) Applicant: ALCATEL LUCENT, 92100 Boulogne-Billancourt (FR)
(72) Inventor: Osman, Aydin, 70435 Stuttgart (DE); Volker, Braun, 70435 Stuttgart (DE); Hardy, Halbauer, 70435 Stuttgart (DE)
(74) Representative: DREISS Patentanwälte PartG mbB

(57) **Abstract**

A method and device for transmitting data in a telecommunication network, the method comprising
- reading part of a first packet stream (I) from an input (In),
- segmenting the part of the first packet stream (I) into packets for at least two second packet streams according to at least one link data rate (R1, R2) of at least one data link (L1, L2) used for transmitting one of the at least two second packet streams,
- sending the packets as part of the respective second packet stream via at least two respective data links (L1, L2).

## Description

### Field of the invention

The invention relates to a method and device for transmitting data in a telecommunication network.

### Background

Multipath Transmission Control Protocol, well known as Multipath TCP, is based on the Transmission Control Protocol, well known as TCP.

TCP and the Internet Protocol, well known as IP, form the core protocols of the Internet protocol suite. TCP/IP provides end-to-end connectivity for transmission of data from a source to a destination via a telecommunication network. TCP/IP specifies how data should be packetized, addressed, transmitted, routed and received at the destination. Four abstraction layers are used to sort all related protocols according to the scope of networking involved.

The layers are:
The link layer containing communication technologies for a link, i.e. single network segment connecting adjacent network nodes;
The internet layer connecting hosts, i.e. computers connected to the network, across independent networks establishing internetworking;
The transport layer handling host-to-host communication, i.e. end-to-end communication between the computers connected to the network;
The application layer, which provides process-to-process application data exchange.

The layer implementations are contained for example in the TCP/IP model according to RFC 1122 [Requirements for Internet Hosts - Communication Layers, IETF, R. Braden (Editor), October 1989].

The Radio Link Protocol, well known as RLP, is an automatic repeat request fragmentation protocol, well known as ARQ, used over a wireless, typically cellular, air interface, i.e. a radio link. A RLP detects packet losses and performs retransmissions to bring packet loss over the radio link down to an amount suitable for TCP/IP applications. In Wideband Code Division Multiple Access systems, well known as W-CDMA systems, the Radio Link Protocol is called Radio Link Control, well known as RLC.

Multipath TCP uses the same user interface as TCP and modifies TCP to spread data across several physical connections. Multipath TCP uses multiple paths to maximize resource usage and increase redundancy and is able to support multiple simultaneous links by providing an end-to-end protocol involving retransmissions and reordering capabilities within a certain time window.

Multipath TCP is known to work well if the data rates on the simultaneous links are approximately equal. But if the data rates on the simultaneous links become unbalanced, the reordering capabilities become insufficient and packets are delivered out of sequence. This causes delay on the end-to-end transmission and leads to an inacceptable user experience.

### Summary

When multiple radio links are used to transmit data from a base station to a mobile station, the data rates on the simultaneously used data links become unbalanced. Therefore the data transmission using Multipath TCP, RLP or RLC suffers. Therefore it is desirable to improve the simultaneous transmission of data over multiple simultaneous radio links to maximize the overall throughput on an end-to-end communication.

The main idea is to read part of a first packet stream from an input, segment the part of the first packet stream into packets for at least two second packet streams according to at least one link data rate of at least one data link used for transmitting one of the at least two second packet streams, and send the packets as part of the respective second packet streams via at least two respective data links. This means that depending on link data rate the individual output packet streams are created from the packets for the at least two second packet streams by segmenting the incoming first packet stream into segments, distributing and joining or concatenating the segments to new packets of at least two output packet streams. This way the individual output packet streams are dynamically adapted to the link data rate of the specific data links carrying the output packet stream. In the receiver, the different packets will in this way arrive approximately in sequence. This limits the size (storage requirements) of the reordering time window in the receiver. Also the throughput on the end-to-end communication using multiple data links is improved, in particular when radio links are used as the second data links.

Advantageously the first packet stream is segmented by adapting the number of packets or the packet size for at least one of the data links, i.e. outputs. This is one way to perform the segmentation efficiently.

Advantageously the link data rate of the respective data link is measured. This allows adaption to changes in the data rate.

Advantageously the first packet stream and the at least two second packet streams are part of an end-to-end communication between a server and a mobile station.

Advantageously the first packet stream is part of an end-to-end communication between a server and an entity and the at least two second packet streams are part of an end-to-end communication between the entity and a mobile station.

Advantageously the at least two second packet streams are sent on at least two radio links, e.g. on 60 GHz and 2 GHz, using the Radio Link Protocol, in particular the Radio Link Control Protocol, or the Multipath Transmission Control Protocol.

Advantageously the first packet stream is segmented at a central network node of a radio access network and the at least two second packet streams are sent from the central network node to at least one base station for sending the at least two second packet streams.

### Brief description of the figures

Figure 1 depicts schematically part of a RAN according to the state of the art.
Figure 2 depicts schematically an example of a protocol stack using multipath RLC.
Figure 3 depicts schematically an example of a protocol stack using multipath TCP.
Figure 4 depicts schematically part of a RAN according to the protocol stack using multipath RLC.
Figure 5 depicts schematically part of a RAN according to the protocol stack using multipath TCP.
Figure 6 depicts schematically a first RAN protocol option.
Figure 7 depicts schematically a second RAN protocol option.
Figure 8 depicts schematically a third RAN protocol option.
Figure 9 depicts schematically a fourth RAN protocol option.

### Description of the embodiments

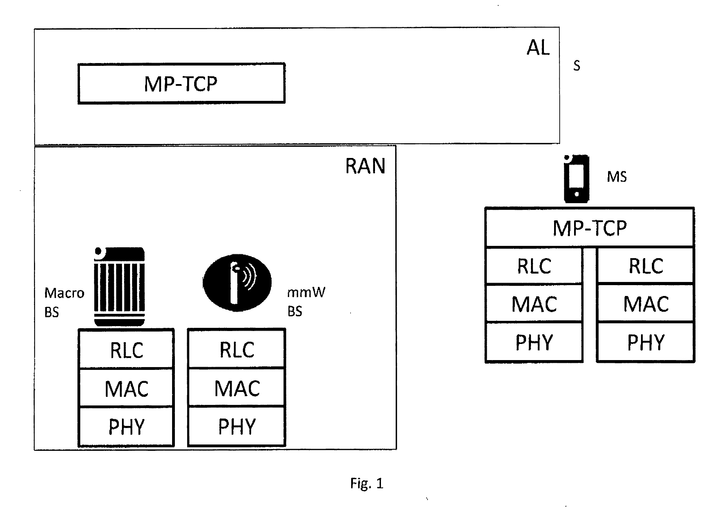

Figure 1 depicts schematically part of a radio access network RAN according to the state of the art.

A radio link of the RAN may be according Wideband Code Division Multiple Access W-CDMA, the Long Term Evolution standard LTE also referred to as IMT-2000, the advanced Long Term Evolution standard LTE advanced also referred to as IMT advanced, a Wireless Local Area Network link WLAN e.g. according to any of the IEEE 802.11 standards, or a millimeter Wave link mmW e.g. according to any of the IEEE 802.15, 802.16 standards or IEEE 802.11ad on 60GHz.

Often the WLAN or mmW link supports higher link data rates than the LTE advanced link because higher carrier frequencies such as 5GHz or >20GHz enable wider system bandwidths.

The RAN according to the state of the art operates using the Multipath Transmission Control Protocol MP-TCP, to connect a mobile station MS to a server S. The connection in the example is via a Macro Base Station Macro BS and a millimeter Wave Base station mmW BS.

The mobile station MS can support multiple simultaneous radio connections, e.g. a LTE link and a WLAN link, an LTE link and a mmW link.

The Macro BS in the example provides access to the telecommunication network using W-CDMA or LTE-A. The mmW BS in the example provides access to the telecommunication network using aforementioned mmW link.

The Macro BS, the mmW BS and the mobile station MS in Figure 1 comprise individual implementations of a protocol stack including individual implementations of the Radio Link Control RLC, the Media Access Control MAC and the Physical Layer PHY.

The Media Access Control MAC is a link layer device that the Physical Layer PHY connects to a wireless medium or physical medium.

In the example physical media, e.g. optical links, are used to connect the Macro BS and mmW BS to the server S. Wireless media, e.g. aforementioned radio links, are used in the example to connect the Macro BS and mmW BS to the mobile station MS. The links, particularly between the Macro BS and the mmW BS and the server S may be direct or via several network nodes. The Transmission Control Protocol / Internet Protocol TCP/IP are in the example used to establish an end-to-end connection between the server S and the mobile station MS. The end-to-end connection is used to transmit packets from the mobile station MS to the server S and vice versa. The packets form a packet stream from the server S to the mobile station MS or vice versa.

Multipath TCP, referred to as MP-TCP below, is used on the application layer AL in the state of the art according to the example to support the two simultaneous links, via Macro BS and mmW BS. MP-TCP operates using the TCP interface of the TCP/IP end-to-end connection for example to trigger retransmission and reordering of lost packets. This is applied to ensure error-free transmission by using packet retransmissions and reordering.

The server S and the mobile station MS provide an input, e.g. an input buffer, that allows waiting for retransmission of lost packets within a certain time window and reordering of data in the input buffer to reconstruct the packet stream in the right order. Likewise an output, e.g. output buffer, in the server S and the mobile station MS allow retransmission of any lost packet upon receipt of the respective TCP signals, e.g. ACK or NACK, during the same or another certain time window.

MP-TCP is this way used to transmit data via both, the mmW network and the mobile W-CDMA network. In addition links may be added or dropped as the user moves in or out of coverage without disrupting the end-to-end TCP/IP connection. The link handover is performed automatically in the transport layer, without any special mechanisms at the application or link layer level.

The Radio Link Control RLC is used as automatic repeat request fragmentation protocol for both wireless links, i.e. both radio links. As RLC detects a packet loss in the wireless link, it performs retransmissions to bring packet loss over the radio link down to an amount suitable for the TCP/IP application.

The simultaneous links in the example according to the state of the art are different in terms of link data rate. In comparison to the link data rate R1 of the W-CDMA link connecting the Macro BS and the mobile station MS, the mmW link connecting the mmW BS and the mobile station MS has a much higher link data rate R2.

Therefore despite MP-TCP on the application layer and RLC on the wireless link layer the reordering capabilities become insufficient and packets are delivered out of sequence. This leads to inacceptable user experience.

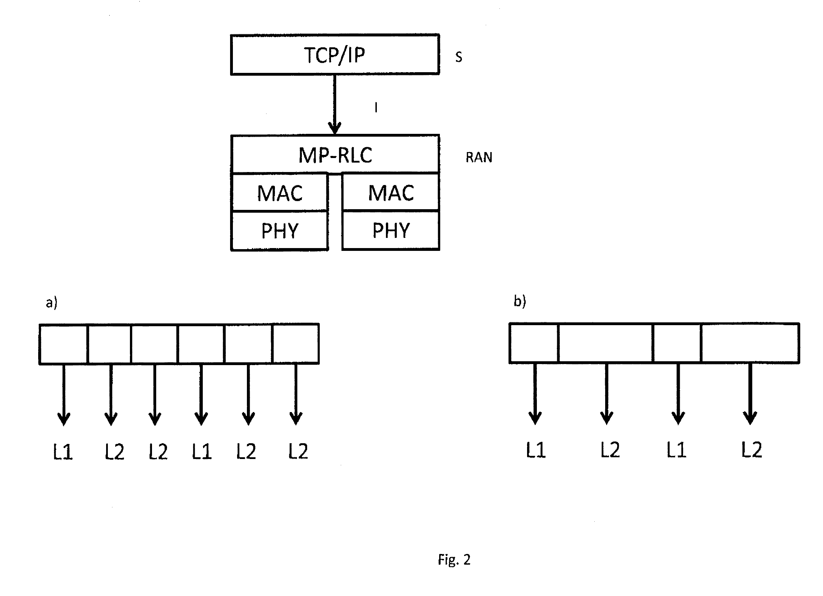

Figure 2 depicts schematically a protocol stack according to a first example using multipath RLC. Multipath RLC is referred to as MP-RLC below. According to the first example a TCP end-to-end connection is established between the server S and the mobile station MS using the TCP/IP protocol stack.

Additionally MP-RLC is implemented on the link layer as described below to dynamically adapt the transmission parameters on each of the simultaneous links taking into account the supported link data rates R1, R2.

Preferably the packet sizes or the number of packets are adapted. Packets are depicted in figure 2 as boxes. The size of the box in figure 2 schematically refers to the size of the packet it represents.

In figure 2 this is illustrated for a downlink transmission from the server S, e.g. an application server on internet, via two data links L1 and L2 of the radio access network RAN. The data stream is managed between the server S and the mobile station MS using the TCP/IP end-to-end connection between the server S and the mobile station MS.

As depicted in two examples a) and b) in figure 2, additionally MP-RLC is implemented as an inner multi-path protocol on the link layer.

The at least two second data links are sent on at least two radio links, e.g. on 60 GHz and 2 GHz, using only one Radio Link Protocol, in particular the Radio Link Control Protocol, here depicted as MP-RLC.

This means that the MP-RLC is aware of the multiple simultaneous links, in the example a first data link L1 and a second data link L2. The MP-RLC is a modified RLC and may be adapted to measure the respective link data rates on the data links L1, L2. For example the volume of the data of the respective RLC stream is captured for a RLC stream period of a predetermined period of time, e.g. in the order of seconds. The respective data rates R1, R2 are determined for example as ratio from this measured volume and the predetermined time period. The first packet stream I is in the example dynamically segmented into two output streams via the first data link L1 and the second data link L2 according to the respective link data rates R1, R2.

Assuming that the link data rate of the first data link L1 is R1 and the link data rate of the second data link L2 is R2, the link data rate R1 of the first packet stream I is approximately R1 ≈ R1 + R2.

The idea is not limited to two data links and RLC. More than two data links may be used as well. Likewise any RLP may be modified accordingly.

Segmenting is achieved e.g. by adapting the number of packets that are sent to individual data links L1, L2. This is depicted in example a) of figure 2. Likewise segmenting may be achieved by adapting the packet sizes of individual packets as in example b) of figure 2.

In example a) the distribution of packets of the first packet stream to each of the data links L1, L2 may differ by a constant factor determined according to the measured or predetermined link data rates R1, R2.

For example a first amount of x packets of the first packet stream I is sent via the first data link L1 and then a second amount of y packets of the first packet stream I is sent via the second data link L2. This is repeated while packets of the first packet stream I are received. For example the first amount is selected: x = 1 and the data link rates R1 and R2 are used for determining the second amount: y = R2/R1.

In example b) the packet size for each of the data links L1, L2 may be constant and determined according to the measured or predetermined link data rates R1, R2.

For example the packet size psI of the incoming first packed stream I and the link data rates R1 and R2 are used for determining the packet size for the packets send to the first data link L1: e.g. ps1 = psI * R1/R2 and the packet size send to the second data link L2: e.g. ps2 = psI * (1-R1/R2). Likewise ps1 = psI * R1/(R1+R2) or ps2 = psI * R2/(R1+R2) or ps2 = psI * (1-R1)/(R1+R2) may be used.

Alternatively or additionally the number of packets sent via each of the links is determined from a combination of both, determining the amounts x, y and the packet sizes ps1, ps2 as described above respectively and segmenting the first packet stream I accordingly.

The at least two second packet streams are for example created by distributing and joining or concatenating the segments of the first packet stream I to form packets of the respective of the at least two second packet streams. To that end packets may be formed in the respective output buffer of the at least two second packet streams.

In the receiver of the mobile station MS the different packets will in this way arrive approximately in sequence.

This limits the size (storage requirements) of the reordering window in the receiver. The reordering window corresponds to the time window that the data is kept. Reordering is still required due to retransmissions of some of the RLC packets. The mobile station MS therefore comprises storage, e.g. the input buffer, for packets received in a predetermined window and is adapted to perform this reordering.

As a result the total data rate approximately equals the link data rates on the two links R1 + R2.

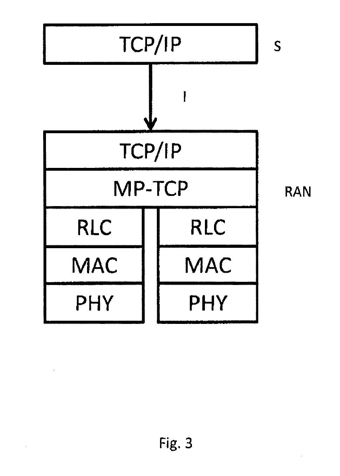

Figure 3 schematically depicts a protocol stack according to a second example. As described for figure 2, the first packet stream I is a downstream from the server S to the mobile station MS.

According to the second example, the TCP protocol is used for an end-to-end connection between the server S and the RAN. This means that the TCP/IP connection is terminated at an entity, e.g. a network node or base station, in the RAN. This function could be implemented in any node, e.g. of the core network or the access network, between the data network in the internet and the user equipment. That entity is connected to the mobile station MS using the MP-TCP protocol to establish another end-to-end connection between the RAN and the mobile station MS. That entity is hence referred to as MP-TCP entity below.

The MP-TCP entity in the radio access network is segmenting the first packet stream I into two second packet streams as described above and shown in the examples a) and b) of figure 2.
The at least two second data streams are sent on at least two radio links, e.g. on 60 GHz and 2 GHz, using a MP-TCP entity in the radio access network in contrast to the state of the art implementation of MP-TCP.

Individual RLC is used for the individual data links. In contrast to the first example, the RLC is not modified in the second example. Instead the TCP/IP connection is terminated at the MP-TCP entity and MP-TCP is used to segment the first packet stream I.

In any of the examples the mobile station MS is connected to the radio access network RAN via two wireless links supporting the link data rates R1 and R2. In a preferred implementation, in comparison to the link data rate R1 of the W-CDMA link connecting the Macro BS and the mobile station MS, the mmW link connecting the mmW BS and the mobile station MS has a much higher link data rate R2, i.e. R2 >> R1. The protocol stacks according to the first and second example however may be used in other scenario with R2 > R1 or with only intermittent differences between R1 and R2 as well.

Instead of constant amounts x, y or packet sizes ps1, ps2, the amounts x, y or packet sizes ps1, ps2 may be determined dynamically every processing cycle, from the measured or predetermined link data rates R1, R2. The predetermined link data rates R1, R2 are for example maximum net data rates according to the specification of the respective radio link, e.g. maximum net data rate of 54 Mbit/s for a WLAN link according to the IEEE 802.11a standard or 384 Kb/s for the IMT-2000 air interface.

Any other end-to-end protocol such as UDP may be applied to ensure error-free transmission by using packet retransmissions and reordering. Any other Radio Link Protocol RLP may also be used on the individual simultaneous wireless links.

For the first example the segmentation on the multipath Radio Link Control MP-RLC is transparent, in the sense of not noticeable, from the TCP end-to-end connection. This means that no changes on the application layer AL are required to implement this first example.

For the second example, the standard RLC, MAC and PHY are used on the radio links. This means that no changes for these layers are required to achieve the better user experience.

The protocol stacks according to any of the examples are implemented in the telecommunication network on one or more entities.

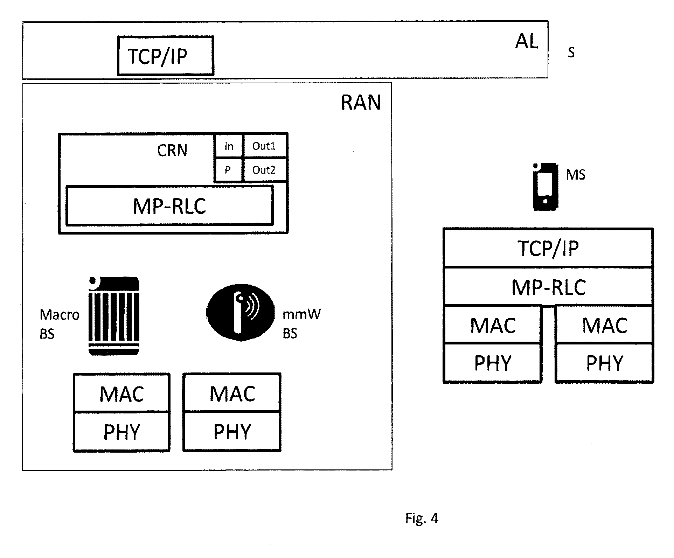

Figure 4 depicts schematically part of a RAN according to the protocol stack using the MP-RLC as described in the first example above. The entities of figure 4 that correspond to the same entities in figure 1 are labelled with the same references and not explained again.

A central network node CRN according to a first embodiment is depicted in figure 4. This central network node CRN is adapted for transmitting data in the telecommunication network and comprises an input In to receive the first packet stream I. Furthermore the central network node CRN comprises a processor P to segment the first packet stream I into at least two second packet streams according to the link data rates R1 and R2 of the data links L1, L2 sent via a respective output Out1, Out2 of the central network node CRN. The central network node CRN may comprise more than two outputs, in particular as many outputs as individual parallel wireless data links are to be used.

In the example two second packet streams are sent: one via the first output Out1 and aforementioned first data link L1 and another via the second output Out2 and aforementioned second data link L2.

The central network node CRN and the mobile station MS are adapted to use the MP-RLC to transmit the data packets on the individual wireless links. This way for the downstream of a packet stream from the server S to the mobile station MS the first packet stream I from the server S is segmented at the central network node CRN. The first data packet stream is forwarded to the Macro BS and the second data packet stream is forwarded to the mmW BS. To that end the first output Out1 and the second output Out2 are connected to the Macro BS and the mmW BS via data links not depicted in figure 4, e.g. optical fibre links.

The first output data packet stream is sent from the Macro BS via the first data link L1 to the mobile station MS. The second output data packet stream is sent from the mmW BS via the second data link L2 to the mobile station MS.

The mobile station MS is adapted to regenerate the received first and second output data packet streams at the mobile station using the MP-RLC.

The processor P is adapted to segment the first packet stream I by selecting the number of packets x, y or the packet size ps1, ps2 as described above. Likewise the processor P may be adapted to segment the first packet stream I by a combination of both.

Additionally the processor P may be adapted to measure the link data rate R1 and R2 of the respective data link L1, L2. Alternatively any base station used, e.g. the Macro BS and the mmW BS may measure and provide the link data rate R1 and R2 for their respective links to the processor P.

This means that the first packet stream I is segmented at the central network node CRN of the radio access network RAN and the at least two second packet streams are forwarded from the central network node CRN to at least one base station BS comprising at least one of the at least two outputs for sending the at least two second packet streams.

The first packet stream I is preferably dynamically segmented into the two or more output packet streams according to the respective link data rates R1 and R2. Dynamically in this context refers to frequent, cyclic or permanent adaption of the segmentation depending on the link data rate of at least one of the data links. The segmentation may be statically as well, i.e. using predetermined constant factors depending on the average link data rates or assumed data rates R1, R2.

As a result the total data rate approximately equals the link data rates on the two links R1 + R2 when ignoring protocol overhead and segmenting delay.

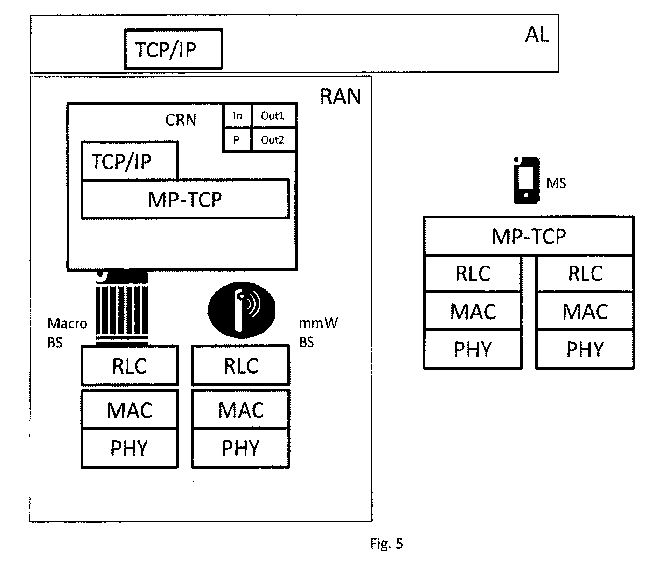

Figure 5 depicts schematically part of a RAN according to the protocol stack using the multipath TCP MP-TCP as described in the second example above. The entities of figure 5 that correspond to the same entities in figure 4 are labelled with the same references and not explained again.

A central network node CRN according to a second embodiment is depicted in figure 5.

The central network node CRN and the mobile station MS are adapted to transmit data packets using MP-TCP. To that end the first packet stream I is segmented as describe above in the second example and the individual data streams are sent using MP-TCP.

The processor of the central network node CRN is adapted to establish an end-to-end TCP connection with the server S via the input In to receive the first packet stream I. The processor is further adapted to establish the MP-TCP connection with the mobile station MS to send the output data streams to the mobile station MS. In the example RLC on the base stations and the mobile station MS is used.

The embodiments described above are using the central network node CRN for segmentation. Alternatively the segmentation may be performed in the base stations in a co-sited IMT advanced approach using the Macro BS and the mmW BS. This means that the MP-TCP or the MP-RLC can be executed in the base stations instead of in a central network node CRN.

For example in LTE networks the central network node CRN may be the LTE base station that may also implement the Macro BS and mmW BS.

It is understood by the person skilled in the art, that the upstream connection from the mobile station MS to the server S may be implemented likewise.

In any case this means that the radio access network RAN comprises a device with an input In to receive a first packet stream I, a processor P to segment the first packet stream I into at least two second packet streams according to a link data rate R1, R2 of a respective data link L1, L2, and at least two outputs Out1, Out2 to send the at least two second packet streams.

In particular for the integration of mmW and IMT systems several RAN protocol options exist. It is assumed in the following a dual connectivity scenario, where a mobile station MS simultaneously supports an IMT link (LTE advanced) with data rate R1 and a mmW link with data rate R2, where typically R2 >> R1. A relevant aspect is whether a service (data stream) is carried over one of the links by means of link selection, or whether it is simultaneously carried over both the IMT and MMW links.

It is further assumed that both IMT and mmW links will use a protocol stack similar as used in the LTE RAN. The protocol stack of the LTE RAN uses PDCP, RLC, MAC and PHY. PDCP is the well-known Packet Data Convergence Protocol. The major functionalities of the protocol layers are summarized in following Table:

| **Protocol layer** | **Supported functionality** | **Entity per** |
|---|---|---|
| PDCP | - IP header compression | SAE bearer of MS |
| | - Ciphering and integrity protection | |
| RLC | - Segmentation/concatenation | Radio bearer of MS |
| | - ARQ retransmissions | |
| | - In-sequence delivery to higher layers | |
| MAC | - HARQ | Per radio cell |
| | - Scheduling | |
| PHY | - Coding and modulation | Per radio cell |

The 5G RAN may consist of a single node, i.e. a base station node, as in LTE, or the RAN may use a centralized node above the base station to host part of the protocol layers, typically PDCP/RLC layers, as with RNC of High Speed Packet Access HSPA.

The centralized node may be aforementioned centralized network node. The base station may be any of the aforementioned Macro BS or mmW BS.

The centralized node may be a candidate to facilitate handovers between the mmW serving cells, e.g. served by the mmW BS, where more frequent blocking is expected as compared to the IMT links, e.g. served by the Macro BS.

Single node RAN has the advantage that RLC and MAC layers are tightly integrated, i.e. RLC segmentation can be carried out in a way that a PHY transport block carries exactly one RLC Packet Data Unit PDU. This saves protocol overhead and can reduce RLC Round Trip Time RTT, as ACK/NACK information of the Hybrid Automatic Repeat Request HARQ protocol can be used to trigger RLC retransmissions.

RLC implemented in a centralized node above the BS can use rate adaptive segmentation on a semi-static time basis. In this case, the size of the RLC PDU determines the smallest size of the PHY transport block, and the PHY transport block carries an integer number (>=1) of RLC PDUs.

The segmentation is for example performed according to any of the examples or embodiments described above in the individual layers according to one of the following RAN protocol options.

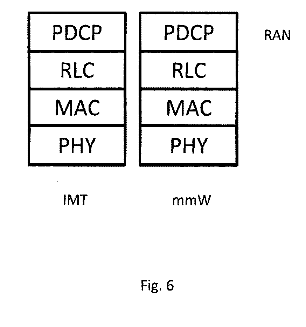

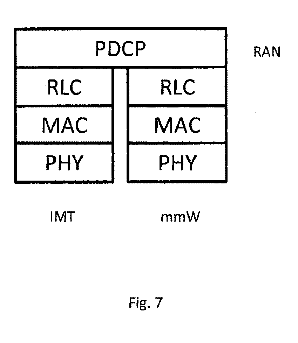

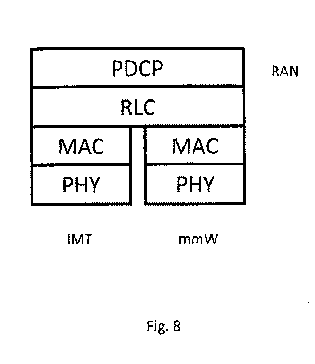

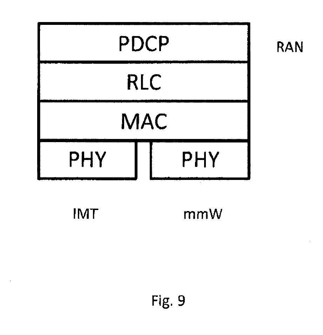

Figures 6 to 9 depict schematically a first, second, third and fourth RAN protocol option.

These RAN protocol options are used for integration of mmW and IMT systems in which the mmW link data rate R2 is much higher than the IMT link data rate R1, e.g. R2 >> R1.
- Option 1: maintain separate PDCP/RLC/MAC/PHY layers for the IMT and mmW links.
- Option 2: use a common PDCP layer and separate RLC/MAC/PHY layers.
- Option 3: use common PDCP/RLC layers and separate MAC/PHY layers. For example on RLC layer the RLC entity indicates output buffer filling per queue or user to the MAC layer. In this case for example full output buffer filling is reported to the MAC entity implementing the IMT and mmW MAC layer. Likewise the RLC entity may partition the indicated output buffer filling based on link rates, e.g. using aforementioned factors ps1 and ps2, so that either MAC entity receives a different output buffer filling.
Alternatively, the RLC entity may overrule a MAC scheduling decision by not providing data to the MAC of the IMT or mmW link.

In any case, it is ensured that the separate MAC entities do not directly access the RLC input or output buffer in an uncoordinated manner.
- Option 4: use common PDCP/RLC/MAC layers and separate PHY layers. For example a common MAC layer is used for the IMT and mmW link. This enables joint optimization of scheduling decisions. For example finite input or output buffer filling can be transmitted in one transport block over mmW link, in order to avoid a transport block on the IMT link. The RLC entity in this case may report the full output buffer filling state per queue or user.

Options 2-4 use one or several common protocol layers which can be implemented in the base station, in the centralized node, or in a core network node. They can be considered as optional performance enhancements, compliant with the RAN protocol option 1.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A method for transmitting data in a telecommunication network **comprising**
- reading part of a first packet stream (I) from an input (In),
- segmenting the part of the first packet stream (I) into packets for at least two second packet streams according to at least one link data rate (R1, R2) of at least one data link (L1, L2) used for transmitting one of the at least two second packet streams,
- sending the packets as part of the respective second packet stream via at least two respective data links (L1, L2).

2. The method according to claim 1, wherein the first packet stream (I) is segmented by adapting the number of packets or the packet size for at least one of the data links (L1, L2).

3. The method according to any of claims 1 or 2, wherein the link data rate (R1, R2) of the respective data link (L1, L2) is measured.

4. The method according to any of claims 1 to 3, wherein the first packet stream (I) and the at least two second packet streams are part of an end-to-end communication (TCP/IP) between a server (S) and a mobile station (MS).

5. The method according to any of claims 1 to 3, wherein the first packet stream (I) is part of an end-to-end communication between a server (S) and an entity (CRN, Macro BS, mmW BS) and the at least two second packet streams are part of an end-to-end communication between the entity (CRN, Macro BS, mmW BS) and a mobile station (MS).

6. The method according to any of claims 1 to 5, wherein the at least two second packet streams are sent on at least two radio links using the Radio Link Protocol, in particular the Radio Link Control Protocol, or the Multipath Transmission Control Protocol.

7. The method according to any of claims 1 to 6, wherein the first packet stream (I) is segmented at a central network node (CRN, Macro BS, mmW BS) of a radio access network (RAN) and the at least two second packet streams are sent from the central network node (CRN) to at least one base station (Macro BS, mmW BS) for sending the at least two second packet streams.

8. A device for transmitting data in a telecommunication network **comprising**
- an input (In) to read a first packet stream (I),
- a processor (P) to segment the part of the first packet stream (I) into packets for at least two second packet streams according to at least one link data rate (R1, R2) of at least one data link (L1, L2) used for transmitting one of the at least two second packet streams,
- at least two outputs (Out1, Out2) to send the packets as part of the respective second packet stream for transmission via at least two respective data links (L1, L2).

9. The device according to claim 8 wherein the first packet stream (I) is segmented by adapting the number of packets or the packet size for at least one of the data links (L1, L2).

10. The device according to any of claims 8 or 9, wherein the processor (P) is adapted to measure the link data rate (R1, R2) of the respective data links (L1, L2).

11. The device according to any of claims 8 to 10, wherein the first packet stream (I) and the at least two second packet streams are part of an end-to-end communication between a server (S) and a mobile station (MS).

12. The device according to any of claims 8 to 10, wherein the first packet stream (I) is part of an end-to-end communication between a server (S) and an entity (CRN, Macro BS, mmW BS) and the at least two second packet streams are part of an end-to-end communication between the entity (CRN, Macro BS, mmW BS) and a mobile station (MS).

13. The device according to any of claims 8 to 12, wherein the at least two outputs (Out1, Out2) are adapted to send the at least two second packet streams for a radio link using the Radio Link Protocol, in particular the Radio Link Control Protocol, or the Multipath Transmission Control Protocol.

14. The device according to any of claims 8 to 13, wherein the first packet stream (I) is segmented at a central network node (CRN) of a radio access network (RAN) and the at least two second packet streams are sent from the central network node (CRN) to at least one base station (Macro BS, mmW BS) for sending the at least two second packet streams.

15. The device according to any of claims 8 to 14, adapted to report information about a buffer filling state of a buffer of an output (Out1, Out2) per queue or user.
